Europäisches Patentamt

European Patent Office

Office européen des brevets

(11) Numéro de publication: **0 067 110**
**A2**

(12) **DEMANDE DE BREVET EUROPEEN**

(21) Numéro de dépôt: **82420070.3**

(22) Date de dépôt: **02.06.82**

(51) Int. Cl.³: **G 02 C 5/22**

(30) Priorité: **03.06.81 FR 8111447**

(43) Date de publication de la demande: **15.12.82**
**Bulletin 82/50**

(84) Etats contractants désignés: **AT CH DE IT LI**

(71) Demandeur: **Veuve Henri CHEVASSUS Société**
**Anonyme:, La Doye, F-39400 Morez (FR)**

(72) Inventeur: **Chevassus, Pierre, La Doye, F-39400 Morez**
**(FR)**

(74) Mandataire: **Ropital-Bonvarlet, Claude et al, Cabinet**
**BEAU DE LOMENIE 99, Grande rue de la Guillotière,**
**F-69007 Lyon (FR)**

(54) **Charnière pour monture de lunettes.**

(57) La charnière est caractérisée en ce qu'elle comporte une partie (4) adaptée sur la face de la monture et formée par deux pièces complémentaires (13-14) reliées entre elles par une articulation (17-23) à un degré de liberté, d'axe orthogonal à celui de pivotement de la branche correspondante et d'amplitude angulaire limitée, ladite articulation étant associée à un dispositif (18-28-26) de réglage et d'immobilisation de l'orientation relative desdites pièces.

Application aux lunettes de correction.

"Charnière pour monture de lunettes" :

La présente invention vise les moyens mis en oeuvre pour assurer la liaison et l'articulation entre la face et les branches d'une monture de lunettes et elle concerne, indifféremment, les charnières pour montures de protection ou de correction.

Les charnières ci-dessus ont pour fonction de conférer aux branches deux positions stables par rapport à la face. Dans la première position, les branches s'étendent, en vue du port de la monture, dans une direction sensiblement perpendiculaire à la face. Dans l'autre position, elles sont sensiblement parallèles à la face pour réduire l'encombrement et faciliter le rangement.

Il est traditionnel de monter l'élément charnière de la face d'une monture de lunettes, de manière à conférer, dans la position ouverte des branches, un angle facial moyen fixe pour toutes les lunettes. L'adaptation de l'angle facial en fonction du sujet s'effectue ensuite en mettant à profit la capacité de déformation permanente présentée par les branches. Dans cette optique, une adaptation manuelle est alors réalisée au coup par coup par les opticiens et/ou les sujets eux-mêmes.

On comprend qu'une telle méthode n'est pas satisfaisante car les montures de lunettes peuvent être considérées en pratique comme possédant un angle facial ne correspondant jamais à l'angle devant être recherché pour un sujet donné.

En outre, l'adaptation manuelle par torsion progressive des branches ne permet pas de conférer un confort certain. En effet, en règle générale, la torsion se traduit par un déplacement incontrôlé des parties terminales des branches. Il en résulte alors, soit un serrage excessif responsable d'une gêne ou douleur mastoïdienne, soit une trop grande liberté n'établissant pas le maintien et l'immobilisation de la face sur l'os nasal.

Un autre inconvénient d'une telle méthode réside dans le fait qu'il est extrêmement difficile de procéder aux torsions convenables sur chacune des branches, soit d'une même amplitude lorsque cela est nécessaire en fonction de la morphologie du sujet, soit, au contraire, d'une amplitude différentielle dans le cas inverse. Ainsi, dans les deux cas, la monture n'est jamais correctement adaptée ni ajustée aux caractéristiques anatomiques du porteur.

La présente invention vise à résoudre le problème ci-dessus en proposant une nouvelle charnière susceptible de répondre positivement aux fonctions premières pour lesquelles elle est conçue et offrant, supplémentairement, la possibilité d'apporter un réglage relatif de l'angle facial, c'est-à-dire de l'orientation de chaque branche par rapport au plan de la face.

Un objet de l'invention est de fournir une nouvelle charnière qui soit de conception robuste et simple pour offrir une qualité de service parfaite et durable.

Un autre objet de l'invention est de fournir une charnière dont la mise en oeuvre, l'adaptation, la mise en place ou le montage puisse être effectué sur des montures de lunettes en métal ou en matière plastique.

Un objet supplémentaire de l'invention est d'offrir une nouvelle charnière qui puisse être facilement incluse dans les chaînes de fabrication et de montage automatique des montures.

Un objet supplémentaire de l'invention est de fournir une nouvelle charnière répondant au problème posé sans nuire à l'esthétique de la monture.

Un objet supplémentaire de l'invention est de proposer une nouvelle charnière offrant une possibilité de réglage sur une amplitude angulaire importante.

Un autre avantage encore réside dans le fait que la conception de l'objet de l'invention rend possible un réglage par le sujet lui-même, le dégageant ainsi de toute obligation de consulter un professionnel spécialisé pour un travail d'ajustement ou de modification.

3

0067110

Pour atteindre les buts ci-dessus, la charnière est caractérisée en ce que la partie portée par la face est constituée par deux pièces complémentaires reliées entre elles par une articulation à un degré de liberté, d'axe orthogonal à celui de pivotement et d'amplitude angulaire limitée, ladite articulation étant associée à un dispositif de réglage et d'immobilisation de l'orientation relative desdites pièces.

Diverses autres caractéristiques de l'invention ressortent de la description faite ci-dessous en référence aux dessins annexés qui montrent, à titre d'exemples non limitatifs, des formes de réalisation de l'invention.

La fig. 1 est une élévation partie en coupe montrant, sous forme éclatée, les différents éléments constitutifs de l'objet de l'invention.

La fig. 2 est une vue en plan prise selon la ligne II-II de la fig. 1.

La fig. 3 est une élévation illustrant une position caractéristique des éléments constitutifs de l'objet de l'invention, préalablement à sa constitution.

Les fig. 4 et 5 illustrent deux positions caractéristiques de la charnière selon l'invention.

La fig. 6 est une vue latérale schématique d'une monture de lunettes mettant en évidence les résultats découlant des positions de la charnière selon les fig. 4 et 5.

La fig. 7 est une vue en plan représentant, à échelle différente, les éléments constitutifs d'une autre forme de réalisation de l'objet de l'invention.

La fig. 8 est une vue prise selon la ligne VIII-VIII de la fig. 7.

La fig. 9 est une élévation montrant l'association des éléments constitutifs sur une monture de lunettes.

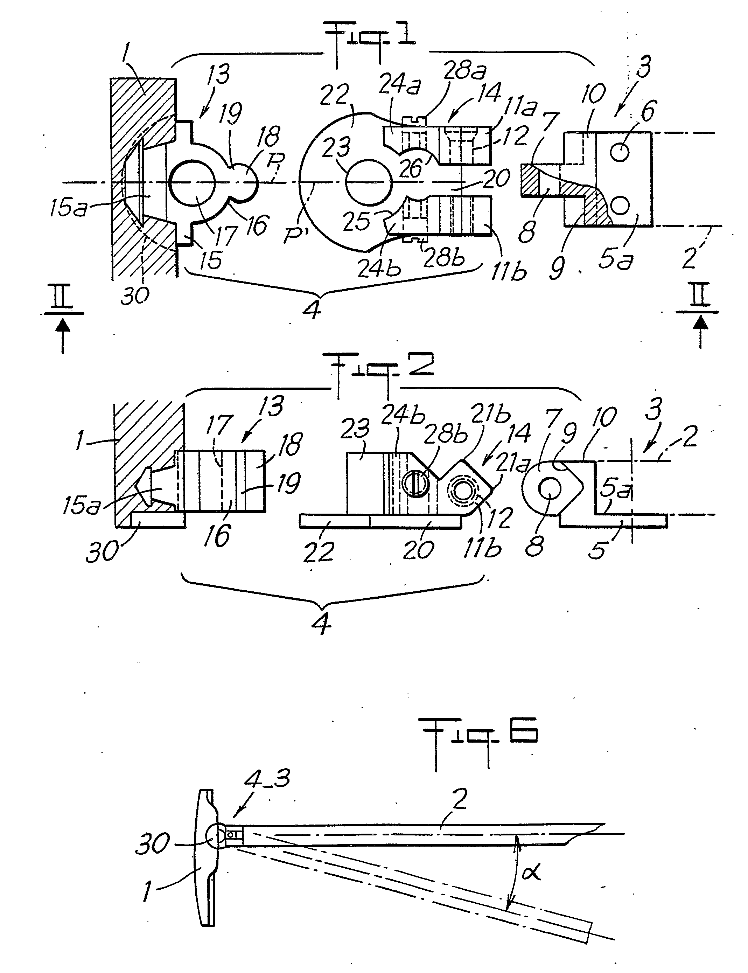

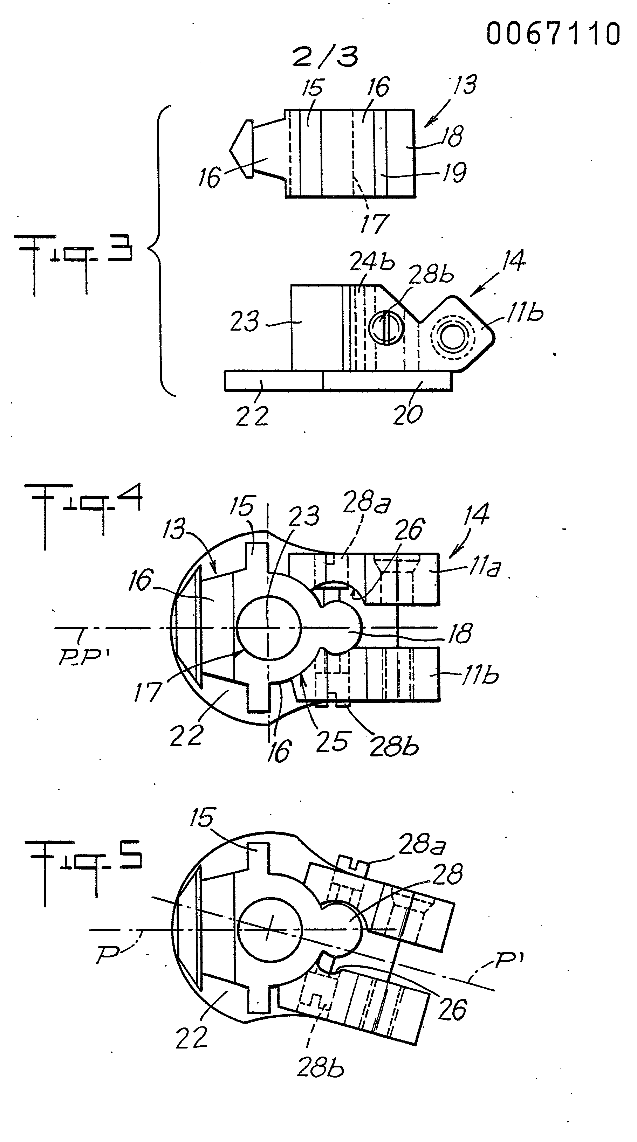

Les fig. 1 et 2 illustrent un exemple d'application d'une charnière conforme à l'invention entre une face 1 d'une monture de lunettes et une branche 2 latérale, par exemple droite. La charnière est du type comprenant deux parties complémentaires 3 et 4 rapportées respectivement sur la branche 2 et sur la face 1. La partie complémentaire 3 comprend une semelle 5 destinée à être fixée sur la branche 2 par des moyens d'immobilisation et de fixation 6, par exemple des vis ou des rivets. La semelle 5 forme en saillie, à partir de sa face 5a dite intérieure, un tenon 7 percé d'un trou 8 et susceptible d'être associé à deux encoches latérales en "V" 9 ménagées dans des épaulements 10.

La seconde partie complémentaire 4 est prévue pour offrir deux charnons 11a-11b percés de deux trous coaxiaux 12, en vue de l'association avec le tenon 7. Les trous 12 sont prévus pour le passage d'un axe de pivotement, non représenté, amené, après insertion du tenon 7 entre les charnons 11, à traverser également le trou 8. L'axe de pivotement peut être du type à lacet ou, au contraire, être constitué par une vis susceptible de coopérer avec un taraudage présenté par l'un des trous 12.

Selon l'invention, la seconde partie 4 constitutive de la charnière est constituée par deux pièces complémentaires 13 et 14 reliées entre elles pour former une articulation à un degré de liberté. L'axe de rotation des pièces 13 et 14 est orthogonal à l'axe de pivotement de la charnière proprement dit et l'amplitude de pivotement angulaire est limitée. Une telle articulation est complétée par un dispositif de réglage et d'immobilisation de l'orientation relative des pièces 13 et 14.

La pièce 13 est constituée sous la forme d'une embase comportant, à partir d'une semelle 15, des moyens 15a de fixation avec la face 1. Dans l'exemple illustré, les moyens 15a sont constitués par une ou plusieurs griffes à redents, afin de permettre une insertion, injection ou introduction forcée dans la matière plastique constitutive de la face 1. Il est certain que d'autres moyens techniques équivalents peuvent être retenus pour constituer les moyens 15a. Par exemple, il peut être prévu de faire intervenir des pieds, des tenons, des axes, des rivets ou encore des vis, notamment en cas de monture métallique.

L'embase 13 est prolongée à partir de la semelle 15 et à l'opposé des moyens m par une demi-croix 15a formant une portée semi-cylindrique 16, concentrique à un palier cylindrique 17, dont l'axe est contenu dans un plan P de symétrie de l'embase 13. La portée semi-cylindrique 16 est prolongée par un bossage saillant 18, de forme sensiblement semi-cylindrique, aligné avec le plan P et raccordé à la portée 16 par un pied 19 de plus faible section. Le diamètre du bossage 18 est inférieur à celui de la portée 16.

La pièce complémentaire 13 est adaptée sur le côté intérieur de la face 1, à proximité du bord latéral droit, pour que l'axe du palier 17 soit sensiblement horizontal dans une position d'utilisation de la monture.

La seconde pièce complémentaire 14 est constituée sous la forme d'une chape, comprenant une semelle 20 à partir de la face interne 20a de laquelle s'élèvent en saillie les charnons parallèles 11a-11b. Ces derniers peuvent être réalisés de manière à présenter un contour polygonal présentant, notamment, deux angles saillants 21a et 21b, distants angulairement de, sensiblement, 90° et destinés à coopérer avec les encoches en "V" 9 de la partie 3.

La semelle 20 s'étend à l'opposé des charnons 11 et forme une plaquette 22 dont la largeur est au moins égale à la mesure correspondante de la semelle 5 de la pièce 13. La plaquette 22 présente, en son centre, un tourillon 23 de même diamètre que le palier 17. De préférence, la plaquette 22 possède, à l'opposé des charnons 11, un contour extérieur semi-circulaire concentrique au tourillon 23.

Les charnons 11a-11b forment, en direction de la plaquette 22, deux prolongements 24a-24b massifs, qui délimitent, à partir de leur face interne et de leur extrémité transversale correspondante, deux faces concaves de même enveloppe semi-cylindrique. Ces deux faces concentriques au tourillon 23 délimitent, ainsi, un siège 25 partiel semi-cylindrique. Les faces internes des prolongements 24 délimitent, également, à partir du siège 25, un évidement 26 d'enveloppe générale cylindrique, décalé latéralement par rapport au plan de symétrie longitudinal P' de la pièce 14. La fig. 2 montre que les prolongements 24a-24b possèdent, à partir de la semelle 20, une hauteur égale à la mesure axiale de la portée 16.

Les prolongements 24a-24b présentent, par ailleurs, deux trous taraudés pratiqués selon une même direction parallèle aux trous 12 et au plan de la semelle 20. Les trous taraudés sont ménagés de manière à déboucher en opposition l'un de l'autre dans les faces des prolongements 24a-24b délimitant l'évidement 26. Les trous taraudés sont occupés par deux vis 28a-28b, de préférence sans tête, susceptibles d'être actionnées par un tournevis à partir des faces latérales extérieures des prolongements 24a-24b.

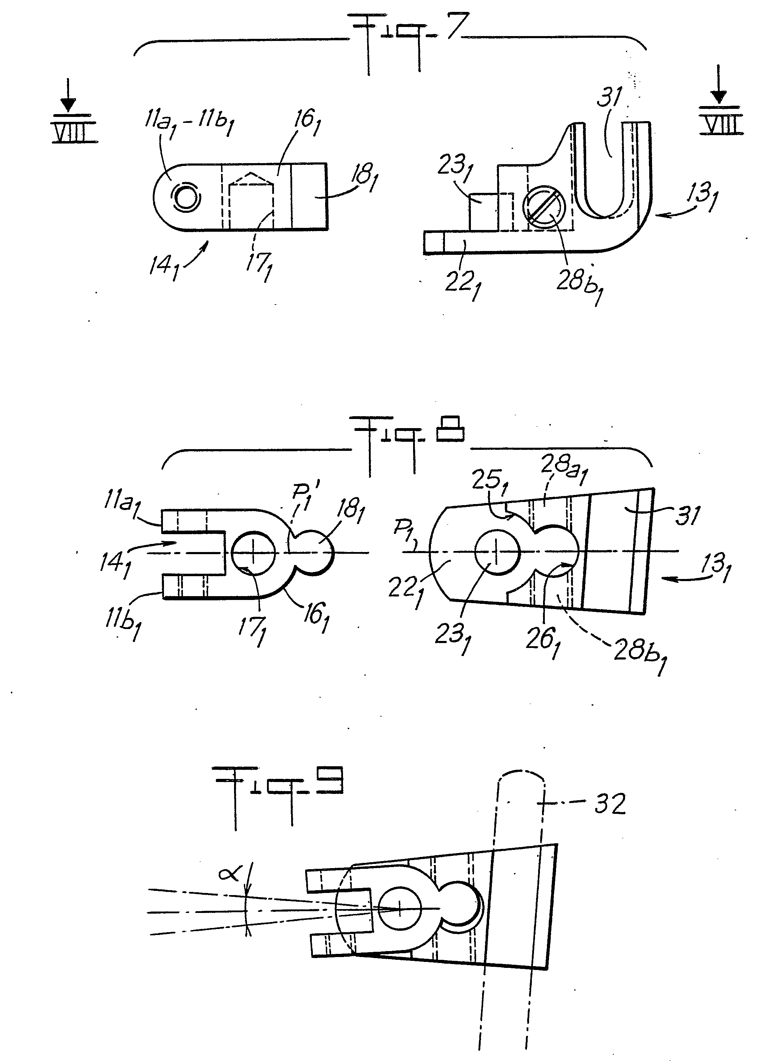

La fig. 3 montre que, lors de l'assemblage, les pièces complémentaires 13 et 14 sont disposées en superposition de plans, de manière à rendre possible l'introduction du bossage 18 dans l'évidement 26 et du tourillon 23 dans le palier 17. Simultanément, la portée 16 est amenée en coopération avec le siège 25. Cette reconstitution de la partie 4 est effectuée après montage de la pièce 13 sur la face 1. La fig. 2 montre que cette face peut, le cas échéant, comporter un dégagement 30 ménagé dans son bord transversal pour permettre l'incrustation de la plaquette 22.

Dans l'état illustré par la fig. 4, la pièce complémentaire 14 peut pivoter, relativement à l'embase 13, sur le tourillon 23, dans la mesure de débattement du bossage 18 à l'intérieur de l'évidement 26. A supposer que la vis 28b soit effacée par rapport à l'évidement 26, le vissage de la vis 28a établit un contact avec le bossage 18 qui est alors déplacé angulairement pour être appliqué sur la face concave du prolongement 24b définissant l'évidement 26. Dans cette position, compte tenu du déport de l'évidement 26 par rapport au plan P', la branche 2 s'étend de façon sensiblement perpendiculaire par rapport à la face 1, comme schématisé par la fig. 6.

Pour régler et ajuster l'angle facial devant être présenté par le plan de la face 1, la vis 28a est partiellement dévissée puis la vis 28b est vissée pour agir sur le bossage 18. Par réaction, la chappe 14 pivote dans le sens de la flèche $f_1$, entraînant la branche 2 dans le sens correspondant (fig. 5). L'angle $\alpha$ maximal susceptible d'être atteint correspond au déport latéral conféré à l'évidement 26 par rapport au plan médian longitudinal P. Les caractéristiques du bossage 18, de l'évidement 26 et des vis 28a et 28b sont retenues, dans l'exemple illustré, pour que l'amplitude de pivotement possible soit voisine de 15°.

Les deux pièces 13 et 14 décrites ci-dessus peuvent être assemblées facilement dans une chaîne de fabrication automatique puisqu'il suffit d'un poste de travail de montage, pouvant être inséré à tout stade d'un cycle de travail et de montage automatique d'une monture de lunettes.

La coopération mutuelle du bossage 18, de l'évidement 26 et des vis 28a et 28b, réalise un dispositif de réglage et d'immobilisation de l'orientation requise de la branche 2. En effet, par exemple, la vis 28a peut être dévissée pour qu'en agissant sur la vis 28b, le réglage d'orientation précis puisse être apporté. Lorsque ce réglage est effectué, la vis 28b représente alors un organe de butée contre lequel est pressé le bossage 18 sollicité dans le sens correspondant par la vis 28a qui assume alors une fonction de blocage et d'immobilisation.

Les moyens mis en oeuvre offrent ainsi une possibilité de réglage simple, rapide et précis, pouvant être apporté par un personnel qualifié ou, éventuellement, directement par le sujet lui-même.

Dans ce qui précède, il est indiqué que la charnière illustrée aux dessins est une charnière correspondant à une branche droite. Il va de soi que la branche gauche d'une même monture est munie d'une charnière conforme à l'invention, de même conception, mais symétrique par rapport à un plan, c'est-à-dire possédant un évidement 26 déporté dans le sens correspondant pour former une charnière gauche.

Il y a lieu de noter que la liaison entre les pièces 13 et 14 est assurée par le tourillon 23 et la coopération entre la portée 16 et le siège 25. Il en résulte ainsi un centrage efficace de l'articulation qui présente une grande résistance mécanique aux sollicitations d'ouverture et de fermeture de la branche. Cette résistance est accrue par la coopération des vis 28a-28b et par la présence de la plaquette 22 qui représente aussi un cache dissimulant totalement la structure de l'embase 13.

Bien que cela ne soit pas représenté, il est à considérer que les éléments constitutifs de liaison entre les pièces 13 et 14 peuvent faire intervenir l'inversion des moyens décrits pour ce qui concerne le tenon et les charnons ou encore la mise en oeuvre d'un nombre plus important de chacun de ces derniers.

Les fig. 7 à 9 illustrent une variante de réalisation selon laquelle la partie 4 est constituée par une pièce $13_1$, conformée pour délimiter une encoche 31 d'emboîtement du cercle ou drageoir 32 d'une face de monture métallique. Dans un tel cas, la liaison est complétée de façon ferme et résistante, notamment par soudure.

La pièce $13_1$ est réalisée pour porter, à l'inverse de ce qui est décrit dans l'exemple ci-dessus, une plaquette $22_1$, un siège $25_1$, un évidement $26_1$, un tourillon $23_1$ et des vis $28\underline{a}_1$ et $28\underline{b}_1$ formant le dispositif d'immobilisation et d'orientation. Au contraire, la pièce $14_1$ est conformée pour comporter des tenons $11\underline{a}_1$ et $11\underline{b}_1$, ainsi qu'un palier $16_1$, une portée $17_1$ et un bossage $18_1$.

Il y a lieu de noter, également, que dans cet exemple de réalisation, le dégagement $26_1$ est centré par rapport au plan de symétrie longitudinal P'. De cette façon, les moyens de l'invention permettent un débattement angulaire possible de même amplitude de la branche 2, de part et d'autre dudit plan, selon un angle $\alpha$ global, par exemple égal à 10°.

L'invention n'est pas limitée aux exemples décrits et représentés car diverses modifications peuvent y être apportées sans sortir de son cadre.

0067110

REVENDICATIONS :

1 - Charnière pour monture de lunettes du type comprenant une partie intermédiaire associée à une branche de lunettes par un axe de pivotement et à la face de la monture par un axe d'articulation orthogonal à l'axe de pivotement, caractérisée en ce qu'elle comporte une partie (4) portée par la face et constituée par deux pièces complémentaires (13 et 14) comportant :

- un tourillon (23) formé par l'une des pièces,
- un palier (17) formé par l'autre pièce pour recevoir le tourillon avec lequel il définit l'axe d'articulation orthogonal,
- un bossage (18) formé par l'une des pièces perpendiculairement à l'axe d'articulation,
- un évidement (26) ménagé dans l'autre pièce pour recevoir le bossage,
- des moyens (18-28-26) portés par l'une des pièces pour former un dispositif de réglage et d'immobilisation de la position du bossage à l'intérieur de l'évidement.

2 - Charnière selon la revendication 1, caractérisée en ce que le dispositif de réglage et d'immobilisation agit directement sur le bossage (18) à l'intérieur de l'évidement (26).

3 - Charnière selon la revendication 2, caractérisée en ce que le dispositif de réglage et d'immobilisation est constitué par deux vis (28a-28b) portées par la pièce présentant l'évidement (26), alignées selon une direction orthogonale à l'axe d'articulation (23) et disposées dans deux taraudages débouchant dans l'évidement (26) en opposition l'un de l'autre.

4 - Charnière selon la revendication 1, caractérisée en ce que l'axe d'articulation orthogonal est complété par une portée semi-cylindrique (16) formée par l'une des pièces concentriquement au palier (17) et comportant, à sa périphérie, le bossage (18), d'une part, et par un siège complémentaire (25) présenté par l'autre pièce et dans lequel s'ouvre l'évidement (26), d'autre part.

5 - Charnière selon la revendication 1 ou 4, caractérisée en ce que le palier (17), la portée (16) et le bossage (18) sont formés par l'une des pièces constituant une embase (13) destinée à être rapportée sur la face, alors que la plaquette (22), le tourillon (23), le siège (25), l'évidement (26) et le dispositif (28$\underline{a}$-28$\underline{b}$) sont prévus sur l'autre pièce constituant une chape intermédiaire (14) de liaison avec la seconde partie complémentaire de la charnière portée par la branche.

6 - Charnière selon la revendication 1 ou 4, caractérisée en ce que la plaquette ($22_1$), le tourillon ($23_1$) le siège ($25_1$), l'évidement ($26_1$) et le dispositif ($28\underline{a}_1$-$28\underline{b}_1$) sont portés par l'une des pièces ($13_1$) constituant une embase destinée à être rapportée sur la face, alors que le palier ($17_1$), la portée ($16_1$) et le bossage ($18_1$) sont prévus sur l'autre pièce constituant une chape intermédiaire ($14_1$) de liaison avec la seconde partie constitutive de la charnière.

7 - Charnière selon l'une des revendications 1 à 6, caractérisée en ce que l'évidement (26) est déporté par rapport à l'axe de symétrie longitudinal (P) de la pièce qui le forme.

8 - Charnière selon l'une des revendications 1, 5 ou 6, caractérisée en ce que la plaquette (22) est formée par l'une des pièces pour recouvrir latéralement la portée semi-cylindrique (16) de l'autre pièce après assemblage par l'axe d'articulation.

1/3

Fig.1

Fig.2

Fig.6

0067110

Fig.3

Fig.4

Fig.5

0067110

Fig. 7

Fig. 8

Fig. 9